# EUROPEAN PATENT SPECIFICATION

(11) **EP 4 077 160 B1**
(45) Date of publication and mention of the grant of the patent: **30.07.2025**
(21) Application number: 20829580.8
(22) Date of filing: 16.12.2020
(51) Int. Cl.: B65D 85/804, B65D 75/32, A47J 31/36, B65D 83/04

(54) **SYSTEM COMPRISING A BEVERAGE PREPARATION APPARATUS AND AT LEAST ONE PACKAGE CONTAINING ONE PORTION OF BEVERAGE PRECURSOR**
SYSTEM MIT EINER GETRÄNKEZUBEREITUNGSVORRICHTUNG UND MINDESTENS EINER VERPACKUNG ENTHALTEND EINE PORTION EINES GETRÄNKEVORPRODUKTS
SYSTÈME COMPRENANT UN APPAREIL DE PRÉPARATION DE BOISSON ET AU MOINS UN EMBALLAGE CONTENANT UNE PORTION D'UN PRÉCURSEUR DE BOISSON

(30) Priority: 18.12.2019 EP 19217270
(43) Date of publication of application: 26.10.2022
(73) Proprietor: Société des Produits Nestlé S.A., 1800 Vevey (CH)
(72) Inventor: GUILLAUD-BATAILLE, Jean-Christophe, 74200 Thonon-les-Bains (FR); MAGATTI, Marco, 1010 Lausanne (CH); MEYER, Eric, 1009 Pully (CH); OBLIGER, Nicolas, 25170 Franey (FR); ODET, Samuel, 1006 Lausanne (CH); ROSOLEN-DELARUE, Katell, 1800 VEVEY (CH)
(74) Representative: Rosolen-Delarue, Katell
(86) International application number: PCT/EP2020/086331
(87) International publication number: WO 2021/122678

(56) References cited:
- WO-A1-2019/219523
- WO-A1-2019/219524
- FR-A1- 2 784 662
- US-A1- 2004 149 135

## Description

### Field of the invention:

The invention relates to a system comprising a beverage preparation apparatus and at least one package containing one portion of beverage precursor. Such package for storing individual portions of beverage precursor, such as roast-and-ground coffee compacted pieces, is adapted for the preparation of a beverage in a beverage preparation apparatus

Such package relates to a package for storing individual portion of beverage precursor protected from the ambient air and mechanical or physical constraints and which can be adapted to a dispensing device for dispensing the portion individually into a beverage preparation apparatus such as a coffee machine for in-home or professional use (using for example vending machine).

The disclosure also relates to a package strip capable of individually storing multiple portions of beverage precursor.

The disclosure additionally relates to a beverage preparation apparatus comprising a device for dispensing individual portions of beverage precursor, said individual portion being in particular stored in such a package, and adapted for the preparation of a beverage in the beverage preparation apparatus.

### Background of the invention

It is known that coffee is sold in airtight packages to protect it from contact with air that would cause quick oxidation and loss of aromas. The field of portioned beverage and more particularly of closed single-used capsules has developed tremendously. This is especially the case for coffee capsule, essentially because each coffee portion can be well protected by a suitable gastight, functional package until coffee is extracted in a suitable coffee machine.

For example, document WO 2019/219524 discloses a package containing portions of beverage precursor in the form of a portioning band comprising a pair of packaging sheets sealed to one another for enclosing and sealing portions individually and separately in a substantially oxygen impervious manner by the sheets being sealed together about each portion, wherein the portions take the form of substantially spherical shapes which are covered on each side of the band by a sheet being formed with cavities to receive a part of each portion and wherein at least one of the sheet can be cut or torn at least partially about each portion for removal of each portion individually.

Document WO 2019/219523 discloses a beverage portion dispenser for receiving a portioning band containing a plurality of individually sealed beverage precursor portions for the preparation of a beverage wherein the dispenser comprises means for individually collecting and dispensing the beverage precursor portions to a dispensing area, wherein the collecting and dispensing means comprises a portion drive assembly arranged for receiving a part of the flexible portioning band and a separating assembly for individually separating the beverage precursor portions from the portioning band.

Therefore, it is preferable to enable a reliable and effective opening of a package of one portion to properly dispense the individual portion into a beverage preparation device in an apparatus such as a coffee machine.

The present invention alleviates those problems by providing a portioned packaged solution and a portion dispensing solution that at least facilitates a separation of the individual portion of beverage precursor from its package.

### Summary of the invention

The invention relates to a system according to claim 1. The system comprises a beverage preparation apparatus and at least one package containing one portion of beverage precursor for preparing a beverage in the beverage preparation apparatus, the package comprising a pair of packaging sheets sealed to one another for enclosing and sealing the portion of beverage precursor individually in a substantially oxygen impervious manner by the sheets being sealed together about the portion, the sheets forming a cavity covering the beverage precursor portion on each side, wherein the cavity is provided with a ridge on at least one of the sheets.

Such a ridge is configured to cooperate with a protrusion part of the beverage preparation apparatus, more specifically of a dispensing device of the beverage preparation apparatus.

A contact between this ridge of the package and the protrusion part will help to open the package and/or separate, for example by pushing, the beverage precursor portion outside of the package.

More particularly, the contact between this ridge of the package and the protrusion part will facilitate the separation of the individual portion of beverage precursor from its package by pushing the beverage precursor portion outside of the package.

In addition, such configuration of the package provides an individual protective packaging of precursor's portions which can be conveniently handled by a dispensing apparatus as well as be easily opened for the dispensing of individual portions for easy positioning in the machine.

Such a ridge is for example a crest.

For example, the ridge has a crescent shape.

Such a shape allows an easy manufacturing of the package and provides good robustness to the package. Besides, it enables a reliable and satisfying cooperation with the protrusion part of the dispensing device.

According to a preferred embodiment, the ridge extends along a median plane of the package.

For example, the ridge extends on top of the cavity.

According to one example embodiment, the ridge is configured to extend along a dispensing direction of the package into the dispensing device.

Therefore, such ridge is also said longitudinal ridge.

According to one other example embodiment, the ridge is configured to extend across a dispensing direction of the package into the dispensing device.

Therefore, such ridge is also said transverse ridge.

According to one example embodiment, the beverage precursor portion takes the form of substantially spherical shape. However, any flatter shape may suit. As a consequence, the cavity has a ball shape, or any flatter shape.

Preferably, the package is symmetrical with the sheets being sealed on an equatorial plane of the portions.

As a result, the package can be associated to or positioned in a dispensing device from any side and any one of the sheets can be opened, e.g. cut for removal of the individual beverage precursor portion.

The opening of the package for the individual removal of a beverage precursor portion can be obtained by cutting a line or lines such as an arc-shaped line in at least one sheet about the diameter of the portion.

Each sheet should be formed of formable flexible material comprising barrier properties, especially to oxygen and external humidity, and sealing properties.

The sheets may be formed of a usual material, for example of a thermoformed polymer film and/or paper-based material having a thickness between 50 and 250 µm. The sheet or sheets can so be easily cut by a cutting device integrated in the dispensing device to remove the portion individually. Furthermore, each sheet has, for example, permeability to oxygen which is lower than or equal to 2 mL/m2/day/bar for a shelf life of approximately twelve months. Preferably, each portion is enclosed between the sheets with protective gas (e.g. N₂ and/or CO₂). Therefore, the portions sealed by the sheets in the package are individually preserved from oxidation for an extensive period of time. Furthermore, the sheets are preferably barrier to UV light.

Preferably, the sheets are formed of compostable material, preferably bio-sourced compostable and/or recyclable and/or recycled material. Examples of materials are PBS, PLA, cellulose and combinations thereof.

The sheets should also be barrier to external humidity and especially water vapor.

Thus, a package according to the present disclosure provides at least one of the following advantages, or a combination of some of them:
- easy individual handling and dispensing of the portions,
- protection of the beverage precursor against external aggressions (e.g. air, external humidity, UV, shocks, etc.),
- easy handling and insertion of a portion in a brewing chamber of a beverage production device e.g. by avoiding pre-positioning,
- consistency of the portion for the beverage extraction,
- enables the collection of waste package after use for easier composting or recycling,
- easy disposal of the used organic and packaging materials (optionally, it offers a full compostable solution).

In particular, as such a package helps a more reliable opening, the precursor portion is better ejected from the package and dispensed to the brewing unit. Additionally, it participates sorting the package material on one side for easy recycling, the organic residue (beverage precursor portion after use) being collected on another side.

The present disclosure also relates to a package strip comprising a plurality of packages, each housing an individual beverage precursor, as defined above.

In such a strip, two neighboring packages are for example linked together by extensions of the sheets.

According to one example embodiment, the ridges of all the packages of the strip are set in line along an axis of the strip; i.e. the ridges are configured to extend along a dispensing direction of the package strip into the dispensing device.

Such ridges are longitudinal ridges.

According to one example embodiment, the ridges of all the packages of the strip are set parallel to each other across an axis of the strip; i.e. the ridges are configured to extend across a dispensing direction of the package strip into the dispensing device.

Such ridges are transverse ridges.

The strip comprises a free part of the sheets between two neighboring packages.

Thus, the strip can be arranged in a continuous manner in superimposed or wound layers with the portions being arranged in quincunx between two adjacent layers of the strip.

The storage of the packages in quincunx reduces the risk of free movement of individual beverage precursor portions since plays between the portions are limited or avoided when the layers are stacked.

This result in a lower risk of damage (breaking, cracks, erosion ...) of the packages.

The compactness of the package is also improved.

More preferably, neighboring packages are separated from each other by a free part of the sheets in such a manner that the ratio r of the distance between the center of the neighboring packages and the diameter of the packages is comprised between 1.7 and 2.0, preferably between 1.8 and 1.9, most preferably equal to 1.88.

The value of the ratio *r* may be obtained empirically by "trials and error" with the aim to ensure the band to be bent in several layers like a serpentine while the portions of two neighboring layers come precisely arranged in quincunx.

The present disclosure also relates to a beverage preparation apparatus which comprises a dispensing device.

The dispensing device here comprises a protrusion part which is configured to cooperate with one ridge of a package as described above.

According to one example embodiment, the protrusion part comprises a cam.

Accordingly, the cam comprises a circular portion and a nose.

Such a cam acts as a pushing member to assist to expulse the beverage precursor portion from the cavity of one package, after the package is cut open.

The cam is preferably stationary arranged on an internal bearing which is arranged co-centrically and coaxially relative to a driving wheel.

Such driving wheel is configured to receive and lead packages in the dispensing device to be cut opened and to ease extraction the beverage precursor portion out of the corresponding package.

The driving wheel advantageously comprises an annular wall comprising receiving cavities.

The receiving cavities are individually dimensioned and arranged at distance from one another so as to match with the distance d between two neighboring packages of the strip.

The annular wall of the driving wheel further comprises an inner surface which may form a gap with the circular portion of the cam to allow sufficient room for each cavity of one package to sit in.

For example, the gap is interrupted by the nose close to the inner surface of the annular wall.

The nose is preferably positioned past a cutting tool, e.g. at an angle of 10-30° after the cutting tool, to push the portion outside the receiving cavity as the driving wheel rotates.

For example, the nose may be placed in radial alignment direction with a portion collecting means.

As a variant or in addition, the protrusion part may comprise a finger.

Such finger is advantageously fixed in the dispensing device of one beverage preparation apparatus, with a tip of the finger pointing toward a cavity which has been cut opened.

Such protrusion part acts as a stop.

As mentioned above, the invention relates to a system comprising a beverage preparation apparatus as described above, and at least one package as described above, in particular a strip of packages as described above.

Thus, a dispensing device of the apparatus here comprises a protrusion part which cooperates with the ridge of one package.

According to one example embodiment, the protrusion part comprises a cam, and the package comprises at least one longitudinal ridge as describe above.

Thus, when the nose is in contact with one longitudinal ridge of one cavity, whereas the package has already been opened (for example about an opening angle of 260°), the nose squeezes the cavity and pushes the beverage precursor portion outside of the package.

According to another example embodiment, the protrusion part comprises a finger, and the package comprises at least one transverse ridge as describe above.

Thus, once the package has been cut open (for example about an opening angle comprised between 250° and 320°, for example and opening angle of 260°), one transverse ridge of one cavity bumps into the finger which enhances the opening of the package.

As a consequence, this facilitates an extraction of the beverage precursor portion out of the package.

Accordingly, the package of the invention in combination with a specific and dedicated protrusion part of one dispensing device helps opening the package to separate the product from its package.

This also solves a major issue which is the recycling of the current packages because it doesn't require any cleaning or separating steps after brewing, which is very complex.

The waste of products and waste of packages can thus be collected into separate compartments.

### Brief description of the drawings

Additional features and advantages of the present invention are described in, and will be apparent from, the description of the presently preferred embodiments which are set out below with reference to the drawings in which:
Figure 1 is a perspective view of a strip of packages according to a first example embodiment of the invention;
Figure 2 is a side view of the package strip of figure 1 cooperating with a protrusion part of a dispensing device of a beverage preparation apparatus according to a first example embodiment of the invention;
Figure 3 is a perspective view of a strip of packages according to a second example embodiment of the invention;
Figure 4 is a side view of the package strip of figure 3 cooperating with a protrusion part of a dispensing device of a beverage preparation apparatus according to a second example embodiment of the invention; and
Figure 5 show a perspective view of beverage preparation apparatus comprising the protrusion part according to the first example embodiment of the invention.

### Detailed description of the drawings

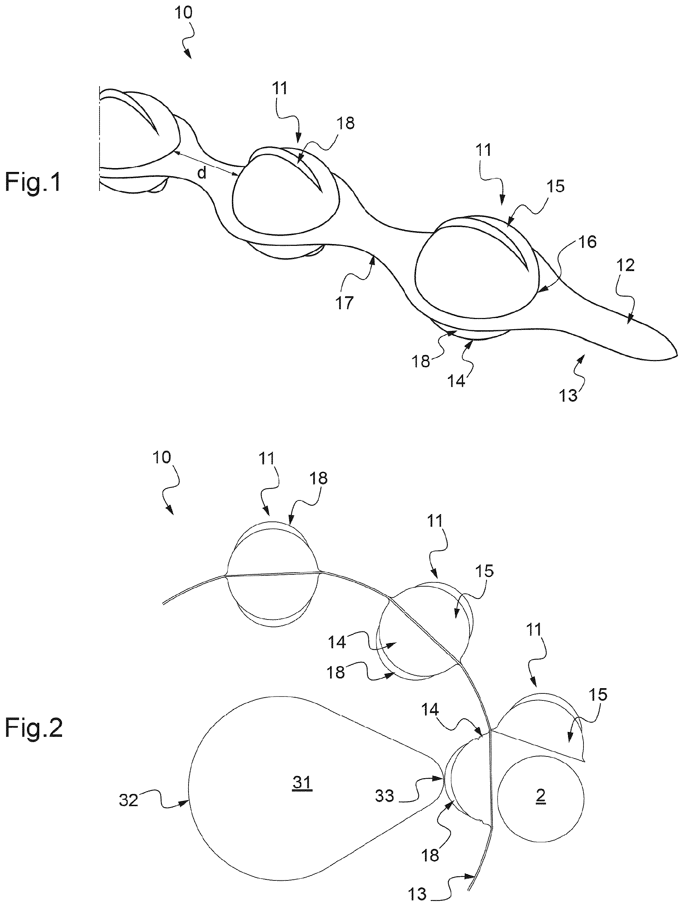

According to figure 1, a package strip 10 according to a first example embodiment of invention is shown in closed or sealed configuration, i.e. before beverage precursor portions 2 (visible in figure 2) are extracted for preparation of a beverage.

The package strip 10 comprises a plurality of packages 11 formed by a pair of welded or sealed sheets 12, 13. Therefore, the sheets enclose a plurality of beverage portions 2.

Each beverage portion may contain a few grams of beverage precursors, for example 5 to 8 grams, corresponding to at least one serve of beverage. The beverage precursor is preferable essentially roast-and-ground coffee. The beverage precursor may also comprise a mix of roast-and-ground coffee and soluble coffee or roast-and ground coffee and milk powder. The beverage precursor may also be a soluble based product such as coffee, chocolate, milk or a combination thereof. For example, one portion may be suitable for preparing one cup of coffee.

The beverage precursor portions 2 are preferably spherical. In the present application, the term "spherical" encompasses also designs such as multiple facets (e.g. like a "football" shape) or a sphere having truncated faces of diameter less than the diameter of the sphere or slightly ovoid or oval or egg shapes. A preferred shape is however a ball with circular cross-sections.

The strip is preferably mainly symmetrical with the sheets being sealed on an equatorial plane (P) of the beverage portions.

The sheets are formed of formable flexible material comprising barrier properties and sealing properties.

The sheets are formed of oxygen impervious material such as a laminate including at least one gas barrier layer. The sheets are also formed of external humidity impervious material so as to preserve the beverage precursor from humidity coming in, especially from water vapor. The material forming the sheets (all films and layers) is preferably compostable.

The term "compostable" means that the material is substantially broken down within a few months or weeks when it is industrially composted. The material is at least about 90% composted under specific conditions within six months as determined by the method of ISO14855 or EN13432.

The laminate may comprise a seal layer such as PLA, PBA, PBS, copolyester of adipidic acid, 1, 4-butanediol and dimethyl terephthalate (PBAT), polylactic acid (PLA), polyvinyl butyral (PVB), poly(vinyl acetate-ethylene) (VAE), poly(ethylene-vinyl acetate) (EVA) and combinations thereof. It may comprise an oxygen barrier layer such as EVOH, PVOH, SiOx, cellophane, metal and combinations thereof. An example of laminate can be PLA/EVOH/PLA. In these examples, PLA may be replaced by PBA, PBS, PPS, copolyester of adipidic acid, 1, 4-butanediol and dimethyl terephthalate (PBAT), polyvinyl butyral (PVB), poly(vinyl acetate-ethylene) (VAE), poly(ethylene-vinyl acetate) (EVA) and combinations thereof. EVOH may also be replaced by PVOH and/or SiOx.

The sheets are here formed with hemi-spherical cavities 14, 15 for receiving the portions 2 therein.

These cavities of the sheets can be obtained by thermoforming. The forming of the cavities to the closest shape of the portions ensures that there is as less free space as possible between the portions 2 and the sheets so that the chance of room for residual air is reduced.

The packages 11 are here arranged along the strip and spaced apart by a constant distance "d".

The sheets can be sealed together around each beverage precursor portion 2 in a discrete manner, e.g., by an annular seal around each portion, or in a continuous manner, e.g., by a continuous seal surrounding the portions and occupying an interspace between packages. In particular, the minimal seal width around each portion is at least 2 mm, preferably at least 3 mm, preferably of about 4 mm or 5 mm.

The thickness of the sealing sheets may be determined as function of the material to ensure both a proper forming of the cavities as close as possible to the beverage precursor portions 2 and a possible opening such as by a cutting line 16. The cutting line 16 is a virtual line where a cutting tool of a dispensing device can apply cutting onto the package to enable the beverage portion to be removed and separated from the strip. The cutting line is preferably located at the intersection between one formed cavity and a free part 17 of the strip. The cutting line could also be a weakening line where the sheet or strip is weakened (e.g. reduction of thickness) such as by laser compared to the rest of the sheet or strip.

According to a first example embodiment of the invention, one package 11 here comprises a ridge 18, which is for example a crest.

The ridge 18 here has a crescent shape.

The ridge is set on the top of one cavity and on a median plane of the corresponding package 11.

In figure 1, the ridge 18 of the packages 11 of the strip 10 are set in line along an axis of the strip; i.e. the ridges are configured to extend along a dispensing direction of the package strip into the dispensing device, as described here below. Therefore, such ridge 18 is also said longitudinal ridge 18 as extending along the longitudinal direction of the strip 10.

Furthermore, the ridges are here orthogonal to an equatorial plane (P) of the beverage portions 2.

Besides, in the illustrated embodiment, the cavities 14, 15 of each sheet 12, 13 are here provided with a ridge 18.

Therefore, the packages 11, and even the strip 10, are symmetrical according to the equatorial plane (P) of the beverage portions 2.

This enable to supply the packages 11 on either side in a beverage preparation apparatus and more specifically in a dispensing device of the beverage preparation apparatus.

A strip 10 of packages 11 as shown in figure 1 is configured to cooperate with a protrusion part as illustrated in figure 2.

In the example embodiment of figure 2, the protrusion part comprises a cam 31.

Accordingly, the cam 31 of the protrusion part comprises a circular portion 32 and a nose 33.

The cam 31 acts as a pushing member to assist to remove the beverage precursor portion 2 from the cavity 14 after the strip 10 is cut open.

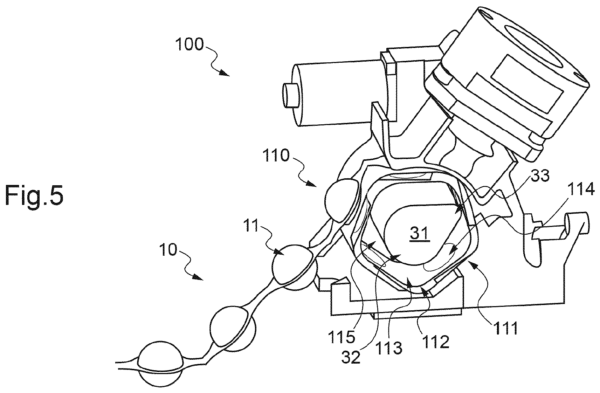

To this end, the cam 31 is positioned coaxially with a driving wheel 111 (not illustrated on this figure but visible figure 5).

The cam 31 is preferably stationary arranged on an internal bearing which is arranged co-centrically relative to the driving wheel 111.

Such driving wheel 111 comprises an annular wall 112 comprising holes with an inner surface 113 of the annular wall forming a gap with the circular portion 32 of the cam 31 to allow sufficient room for each cavity to sit in.

The gap is interrupted by the nose 33 close to the inner surface of the annular wall.

The nose is preferably positioned past a cutting tool, e.g. at an angle of 10-30° after the cutting tool, to push the portion 2 outside the receiving cavity as the driving wheel rotates (here in clockwise direction).

The nose is also preferably placed in radial alignment direction with a portion collecting means.

Thus, when the nose 33 is in contact with one ridge 18 of one cavity 14, whereas the package 11 has already been opened (for example about an opening angle of 260°), then the nose 33 squeezes the cavity 14 and pushes the beverage precursor portion 2 outside of the package 11.

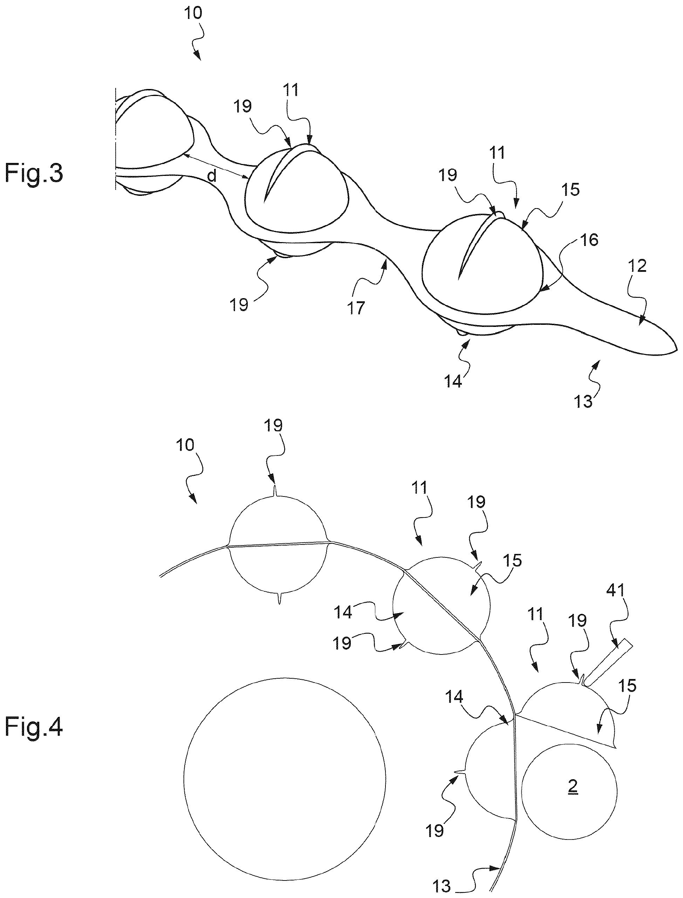

The second example embodiment of figure 3 differs from figure 1 in that the ridge 19 of one cavity is now set across an extension axis of the strip.

Thus, the ridges 19 of all the packages of the strip are set parallel to each other across an axis of the strip; i.e. the ridges 19 are configured to extend across a dispensing direction of the package strip 10 into the dispensing device.

Therefore, such ridge 19 is also said transverse ridge 19.

Same, in the illustrated embodiment of figure 3, the cavities 14, 15 of each sheet 12, 13 are here provided with a ridge 19.

So, the packages 11, and even the strip 10, are symmetrical according to the equatorial plane (P) of the beverage portions 2.

A strip 10 of packages 11 as shown in figure 3 is configured to cooperate with a protrusion part as illustrated in figure 4.

In the example embodiment of figure 4, the protrusion part comprises a finger 41.

Accordingly, the finger 41 is fixed in a dispensing device of a beverage preparation apparatus (not represented in the figures), with a tip of the finger pointing toward a cavity 15 which has been opened.

Such protrusion part acts as a stop member.

Once the package 11, carried on the driving wheel, has been cut open (for example about an opening angle of 260°), one ridge 19 of one cavity 15 bumps into the finger 41 which enhances the opening of the package 11 and as a consequence facilitates an extraction of the beverage precursor portion 2 out of the package 11.

Although not illustrated, the embodiments of figure 1 and 3, and as a consequence of figure 2 and 4, may be combined.

For example, a package 10 may comprise a longitudinal ridge 18 on one cavity 14 and a transverse ridge 19 the other cavity 15.

As another example, both cavities 14, 15 may comprise both a longitudinal ridge 18 and a transverse ridge 19, therefore forming a cross on each cavity. Such embodiment still provides a symmetrical package which can be easily supplied in a dispensing device on either side.

As a consequence of the above, a dispensing device may comprise both a cam 31 as presented and disclosed in connection with figure 2 and a finger 41 as presented and disclosed in connection with figure 4.

Thus, a ridge 18, 19 according to any embodiment of the invention, in cooperation with a protrusion part 31, 41 of a dispensing device of a beverage preparation apparatus, facilitates the extraction of the beverage precursor 2 portion contained in the package 11.

Once extracted, the beverage precursor portion is transported by a specific device or by gravity and moves toward an extraction system of the beverage preparation device of the beverage preparation apparatus.

Figure 5 shows an example embodiment of a beverage preparation apparatus 100 according to one embodiment of the invention.

Such apparatus may be mainly as one described in WO 2019/219523 or WO 2019/219524.

The beverage preparation apparatus 100 comprises a dispensing device 110.

The dispensing device 110 here comprises a cam 31 as a protrusion part, as described in reference with figure 2.

The cam 31 acts as a pushing member to assist to expulse the beverage precursor portion 2 from the cavity of one package after the strip 10 is cut open.

However, the protrusion part may take various forms.

In the illustrated example, the cam 31 is stationary arranged on an internal bearing which is arranged co-centrically and coaxially relative to the driving wheel 111.

As already described, such driving wheel 111 comprises annular wall 112 comprising holes 114, which are receiving cavities.

The receiving cavities 114 are individually dimensioned and arranged at distance from one another so as to match with the distance d between neighboring packages 11 of the strip 10.

The annular wall 112 of the driving wheel 111 further comprises an inner surface 113 which forms a gap 115 with the circular portion 32 of the cam 31 to allow sufficient room for each cavity of one package 11 to sit in.

Gap 115 is interrupted by the nose 33 close to the inner surface 113 of the annular wall 112.

The nose is positioned past a cutting tool, e.g. at an angle of 10-30° after the cutting tool, to push the portion 2 outside the receiving cavity as the driving wheel 111 rotates (here in clockwise direction).

The nose 33 is also placed in radial alignment direction with a portion collecting means (not shown).

Thus, when the nose 33 is in contact with one ridge 18 of one cavity 14, whereas the package 11 has already been opened (for example about an opening angle of 260°), then the nose 33 squeezes the cavity 14 and pushes the beverage precursor portion 2 outside of the package 11, as shown in figure 2.

As a variant or in addition, the dispensing device 110 may comprise a finger 41 as illustrated in figure 4, not visible in figure 5.

The dispensing device may further comprise a package driving assembly arranged for catching one end of the package strip 10.

The driving wheel 111 is for example driven in rotation in a stepwise fashion by the package driving assembly. The driving wheel 111 and other elements of the apparatus 100 may be controlled by control means comprising a control unit which coordinates the motion of the package strip in the dispenser device 110, preferably in a stepwise manner by the package driving assembly, as well as an operation of a separating assembly for removal of the beverage precursor portions 2 from one corresponding package 11.

The dispensing device 110 further comprises package opening means (not shown) such as a cutting tool arranged for opening the cavities of one package by cutting along one cutting line in at least one of the sheets to remove each beverage precursor portion individually. The cutting tool may be driven by a linear motorized actuator configured for moving the cutting tool reciprocally between a retracted position and a cutting position. The cutting tool may be formed as a cylinder of diameter slightly larger than the diameter of one beverage portion and may comprise at least one blade arranged circumferentially on the free edge of the cylinder. Preferably, the cutting tool is arranged to cut the strip on at least 200° or preferably between 300 and 340° about the beverage portion to provide sufficient opening of the cavity and facilitate ejection of the beverage precursor portion while keeping the package material in one piece.

The apparatus 100 may further comprise a chute or the like, arranged for gently receiving and transporting by gravity or otherwise (e.g. air pressure), the beverage precursor portion to a beverage preparation device (not illustrated) to prepare the beverage.

Then, the apparatus 100 preferably comprises at least one container to receive the used package material on one side and the organic residue (beverage precursor portion after use) on another side, which eases recycling and composting of waste.

## Claims

1. System comprising a beverage preparation apparatus (100) and at least one package (11) containing one portion of beverage precursor (2) for preparing a beverage in the beverage preparation apparatus (100), the package comprising a pair of packaging sheets (12, 13) sealed to one another for enclosing and sealing the portion of beverage precursor (2) individually in a substantially oxygen and external humidity impervious manner by the sheets being sealed together about the portion (2), the sheets (12, 13) forming a cavity (14, 15) covering the beverage precursor portion (2) on each side, wherein the cavity (14, 15) is provided with a ridge (18, 19) on at least one of the sheets (12, 13), the ridge (18, 19) being configured to cooperate with a protrusion part (31, 41) of the beverage preparation apparatus (100), wherein the apparatus (100) comprises a dispensing device (110) which comprises said protrusion part (31,41) configured to cooperate with the ridge (18, 19) of the package (11).

2. System according to claim 1, wherein the ridge (18, 19) of the package (11) is a crest and has a crescent shape.

3. System according to anyone of claims 1 or 2, wherein the ridge (18, 19) of the package (11) extends along a median plane of the package, on top of the cavity (14, 15).

4. System according to anyone of claims 1 to 3, wherein the ridge of the package (11) is a longitudinal ridge (18) configured to extend along a dispensing direction of the package into the dispensing device (110) of the apparatus (100).

5. System according to anyone of claims 1 to 4, wherein the ridge of the package (11) is a transverse ridge (19) configured to extend across a dispensing direction of the package into the dispensing device (110) of the apparatus (100).

6. System according to anyone of claims 1 to 5, wherein the package (11) is part of a package strip (10) comprising a plurality of packages (11).

7. System according to claim 6, wherein the protrusion part comprises a cam (31), and one package (11) of the strip (10) comprises at least one longitudinal ridge (18), the cam (31) comprising a nose (33) and when the nose (33) is in contact with the longitudinal ridge (18) of one cavity, the nose squeezes the cavity and pushes the beverage precursor portion (2) outside of the package (11).

8. System according to claim 6 or claim 7, wherein the protrusion part comprises a finger (41), and one package (11) of the strip (10) comprises at least one transverse ridge (19), and once the package (11) has been cut open the transverse ridge (19) bumps into the finger (41) which enhances the opening of the package (11).

## Patentansprüche

1. System, umfassend eine Getränkezubereitungseinrichtung (100) und mindestens eine Packung (11), die eine Portion eines Getränkevorläufers (2) zum Zubereiten eines Getränks in der Getränkezubereitungseinrichtung (100) enthält, die Packung umfassend
ein Paar Packungsfolien (12, 13), die aneinander gesiegelt sind, zum einzelnen Umschließen und Siegeln der Portion des Getränkevorläufers (2) auf eine im Wesentlichen sauerstoff- und außenfeuchtigkeitsundurchlässige Weise, indem die Folien um die Portion (2) herum aneinander gesiegelt sind, wobei die Folien (12, 13) einen Hohlraum (14, 15) bilden, der die Getränkevorläuferportion (2) auf jeder Seite abdeckt, wobei der Hohlraum (14, 15) auf mindestens einer der Folien (12, 13) mit einem Grat (18, 19) versehen ist, wobei der Grat (18, 19) konfiguriert ist, um mit einem Vorsprungsteil (31, 41) der Getränkezubereitungseinrichtung (100) zusammenzuwirken,
wobei die Einrichtung (100) eine Abgabevorrichtung (110) umfasst, die den Vorsprungsteil (31, 41) umfasst, der konfiguriert ist, um mit dem Grat (18, 19) der Packung (11) zusammenwirken.

2. System nach Anspruch 1, wobei der Grat (18, 19) der Packung (11) ein Kamm ist und eine halbmondförmige Form aufweist.

3. System nach einem der Ansprüche 1 oder 2, wobei sich der Grat (18, 19) der Packung (11) entlang einer Mittelebene der Packung über dem Hohlraum (14, 15) erstreckt.

4. System nach einem der Ansprüche 1 bis 3, wobei der Grat der Packung (11) ein Längsgrat (18) ist, der konfiguriert ist, um sich entlang einer Abgaberichtung der Packung in die Abgabevorrichtung (110) der Einrichtung (100) zu erstrecken.

5. System nach einem der Ansprüche 1 bis 4, wobei der Grat der Packung (11) ein Quergrat (19) ist, der konfiguriert ist, um sich quer zu einer Abgaberichtung der Packung in die Abgabevorrichtung (110) der Einrichtung (100) zu erstrecken.

6. System nach einem der Ansprüche 1 bis 5, wobei die Packung (11) Teil eines Packungsstreifens (10) ist, umfassend eine Vielzahl von Packungen (11).

7. System nach Anspruch 6, wobei der Vorsprungsteil einen Nocken (31) umfasst und eine Packung (11) des Streifens (10) mindestens eine Längsrippe (18) umfasst, der Nocken (31) umfassend eine Nase (33) und wenn die Nase (33) in Kontakt mit der Längsrippe (18) eines Hohlraums ist, die Nase den Hohlraum zusammendrückt und die Getränkevorläuferportion (2) aus der Packung (11) herausdrückt.

8. System nach Anspruch 6 oder 7, wobei der Vorsprungsteil einen Finger (41) umfasst und eine Packung (11) des Streifens (10) mindestens eine Querrippe (19) umfasst und die Querrippe (19) nach dem Aufschneiden der Packung (11) gegen den Finger (41) stößt, was das Öffnen der Packung (11) erleichtert.

## Revendications

1. Système comprenant un appareil de préparation de boissons (100) et au moins un emballage (11) contenant une portion de précurseur de boisson (2) pour la préparation d'une boisson dans l'appareil de préparation de boissons (100), l'emballage comprenant
une paire de feuilles d'emballage (12, 13) scellées l'une à l'autre pour enfermer et sceller la portion de précurseur de boisson (2) individuellement de manière sensiblement étanche à l'oxygène et à l'humidité extérieure par les feuilles étant scellées l'une à l'autre autour de la portion (2), les feuilles (12, 13) formant une cavité (14, 15) recouvrant la portion de précurseur de boisson (2) de chaque côté, dans lequel la cavité (14, 15) est pourvue d'une arête (18, 19) sur au moins l'une des feuilles (12, 13), l'arête (18, 19) étant conçue pour coopérer avec une partie saillante (31, 41) de l'appareil de préparation de boissons (100),
dans lequel l'appareil (100) comprend un dispositif de distribution (110) qui comprend ladite partie saillante (31, 41) conçue pour coopérer avec l'arête (18, 19) de l'emballage (11).

2. Système selon la revendication 1, dans lequel l'arête (18, 19) de l'emballage (11) est une crête et présente une forme de croissant.

3. Système selon l'une quelconque des revendications 1 ou 2, dans lequel l'arête (18, 19) de l'emballage (11) s'étend le long d'un plan médian de l'emballage, sur le dessus de la cavité (14, 15).

4. Système selon l'une quelconque des revendications 1 à 3, dans lequel l'arête de l'emballage (11) est une arête longitudinale (18) conçue pour s'étendre le long d'une direction de distribution de l'emballage dans le dispositif de distribution (110) de l'appareil (100).

5. Système selon l'une quelconque des revendications 1 à 4, dans lequel l'arête de l'emballage (11) est une arête transversale (19) conçue pour s'étendre à travers une direction de distribution de l'emballage dans le dispositif de distribution (110) de l'appareil (100).

6. Système selon l'une quelconque des revendications 1 à 5, dans lequel l'emballage (11) fait partie d'une bande d'emballage (10) comprenant une pluralité d'emballages (11).

7. Système selon la revendication 6, dans lequel la partie saillante comprend une came (31), et un emballage (11) de la bande (10) comprend au moins une arête longitudinale (18), la came (31) comprenant un nez (33), et lorsque le nez (33) entre en contact avec l'arête longitudinale (18) d'une cavité, le nez presse la cavité et pousse la portion de précurseur de boisson (2) à l'extérieur de l'emballage (11).

8. Système selon la revendication 6 ou la revendication 7, dans lequel la partie saillante comprend un doigt (41), et un emballage (11) de la bande (10) comprend au moins une arête transversale (19), et une fois que l'emballage (11) a été ouvert par coupure, l'arête transversale (19) se heurte au doigt (41), ce qui améliore l'ouverture de l'emballage (11).
